# FASCICULE DE BREVET EUROPEEN

(11) **EP 1 568 301 B1**
(45) Date de publication et mention de la délivrance du brevet: **13.12.2006**
(21) Numéro de dépôt: 05290433.1
(22) Date de dépôt: 24.02.2005
(51) Int. Cl.: A47J 27/09

(54) **Appareil domestique de cuisson d'aliments sous pression muni d'un système de sécurité à l'ouverture**
Haushaltsdampfdruckkochgerät für Nahrung mit Öffnungssicherheitssystem
Household pressure cooker for food with opening security system

(30) Priorité: 27.02.2004 FR 0402052
(43) Date de publication de la demande: 31.08.2005
(73) Titulaire: SEB S.A., 69132 Ecully Cedex (FR)
(72) Inventeur: Baraille, Eric Laurent, 21000 Dijon (FR); Anota, Daniel Jean-Marie, 21000 Dijon (FR)
(74) Mandataire: Martin, Didier Roland Valéry

(56) Documents cités:
- FR-A- 2 484 817
- FR-A- 2 700 825
- US-A1- 2003 010 216

## Description

La présente invention se rapporte au domaine technique général des appareils domestiques de cuisson d'aliments sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement un appareil domestique de cuisson d'aliments sous pression, à fermeture dite à baïonnette, pourvu d'un couvercle avec une poignée de couvercle et d'une cuve avec une poignée de cuve, le couvercle et la poignée de couvercle associée étant mobiles en rotation par rapport à la cuve et la poignée de cuve, et lesdites poignées étant destinées à être superposées en position de fermeture de l'appareil, ledit appareil comportant un système de verrouillage / déverrouillage comprenant :
- une soupape de sécurité, montée mobile sur le couvercle entre une position de fuite et une position d'étanchéité,
- un verrou avec un pied de commande, ledit verrou étant monté sur la poignée de couvercle avec une possibilité de coulissement radial élastique entre une première et une deuxième positions de butée, et agencé de manière à autoriser, dans sa première position de butée, le libre déplacement de la soupape de sécurité, et à interdire, dans sa deuxième position de butée, le passage de la soupape de sécurité de sa position de fuite vers sa position d'étanchéité,
- des moyens de blocage du verrou dans sa deuxième position de butée, comprenant d'une part un ergot de blocage, monté élastiquement mobile sur le verrou entre une position de repos et une position de contrainte, et d'autre part un contre-ergot de blocage, situé sur la poignée de couvercle, ledit ergot et ledit contre-ergot étant destinés à coopérer ensemble dans une position dite armée dans laquelle l'ergot est dans sa position de repos, pour assurer le maintien du verrou dans sa deuxième position de butée,
- des moyens de déclenchement, disposés sur la poignée de cuve de manière à actionner l'ergot de blocage vers sa position de contrainte, lorsque la poignée de couvercle vient au voisinage de sa position de fermeture, permettant ainsi son désengagement du contre-ergot, et la libération du verrou, lequel est rappelé élastiquement dans sa première position de butée,
- une encoche, ménagée sur la poignée de cuve, au sein de laquelle le pied de commande vient s'introduire lorsque le verrou se trouve dans sa première position de butée.

Les appareils domestiques de cuisson d'aliments sous pression sont également connus sous l'appellation « autocuiseurs ». Les autocuiseurs connus peuvent comporter différents types de systèmes de verrouillage du couvercle sur la cuve.

On distingue ainsi les systèmes de fermeture à étrier, à segment, à couvercle rentrant ou encore à baïonnette. La présente invention concerne plus spécifiquement les systèmes à baïonnette, dont le concept technique est largement répandu.

Dans ces systèmes, la liaison mécanique entre la cuve et le couvercle est réalisée à l'aide de rampes correspondantes disposées respectivement sur la cuve et le couvercle de telle sorte que lorsque l'appareil est verrouillé, lesdites rampes coopèrent ensemble pour contenir l'effort résultant de la pression dans l'enceinte de l'autocuiseur. Les opérations de fermeture et d'ouverture de l'appareil sont effectuées par rotation du couvercle par rapport à la cuve, ce qui permet respectivement l'engagement ou le désengagement des rampes de cuve par les rampes de couvercle.

Pour faciliter la manipulation et en particulier la rotation du couvercle par rapport à la cuve, l'appareil comporte des poignées fixées sur la cuve et le couvercle. L'appareil peut ainsi comporter une poignée de cuve et une poignée de couvercle, ces dernières étant susceptibles de se présenter sous différentes formes, formant ainsi des poignées courtes, ou encore des poignées longues. Il est également possible de compléter les poignées courtes par une poignée centrale disposée sur le couvercle.

Pour améliorer la sécurité d'utilisation de l'autocuiseur, il est connu de le pourvoir d'un verrou, par exemple intégré dans l'une des poignées susmentionnées, et agencé de telle sorte que lorsque l'appareil est sous pression, il soit impossible de faire pivoter le couvercle par rapport à la cuve.

Ainsi, on connaît les autocuiseurs dont le couvercle est équipé d'une soupape de sécurité, susceptible d'occuper une position haute de fermeture, dans laquelle la soupape assure l'étanchéité de l'enceinte, et une position basse d'ouverture, correspondant à une valeur de la pression à l'intérieur de l'enceinte inférieure à une valeur seuil prédéterminée, dans laquelle la soupape laisse passer vers l'extérieur l'air contenu dans le récipient. Ainsi, lorsque le couvercle est fermé et que l'autocuiseur est sous pression, la soupape vient, dans sa position haute de fermeture, s'engager dans un orifice ménagé dans un verrou monté mobile radialement dans la poignée de couvercle. Dans cette configuration, le verrou est bloqué en position et empêche la rotation du couvercle par rapport à la cuve.

Au contraire, lorsque la pression à l'intérieur de l'enceinte redevient inférieure à la valeur seuil prédéterminée, la soupape de sécurité retourne dans sa position basse de fuite libérant ainsi le verrou.

Pour ouvrir l'appareil, il suffit alors à l'utilisateur de faire pivoter la poignée de couvercle relativement à la poignée de cuve, cette opération ayant pour effet d'entraîner la rotation du couvercle et le désengagement des rampes.

Les systèmes de sécurité connus et répandus, s'ils présentent plusieurs avantages notamment liés à leur caractère automatique, facilitant la manipulation de l'appareil par l'utilisateur, peuvent s'avérer ne pas donner entière satisfaction.

En particulier, un colmatage progressif de la partie fonctionnelle de la soupape de sécurité peut se produire, en raison notamment de l'accumulation d'aliments ou de calcaire dans cette zone, un tel colmatage étant susceptible de gêner le déplacement de la soupape de sécurité.

En outre, l'utilisateur peut, dès lors que la soupape de sécurité est en position basse, faire pivoter la poignée de couvercle relativement à la poignée de cuve de manière à ouvrir l'autocuiseur. Or, dans le cas de figure précédemment décrit, il est possible qu'en raison du colmatage, la soupape de sécurité soit en position basse tout en assurant une certaine étanchéité de l'enceinte. Dans un tel cas de figure, l'utilisateur est alors susceptible d'ouvrir l'appareil alors que ce dernier est encore sous une certaine pression.

On voit donc tout l'intérêt de réaliser un appareil de cuisson d'aliments sous pression muni d'un système de verrouillage qui, bien que sensiblement automatique et facilement manipulable par l'utilisateur, n'autorise l'ouverture de l'appareil que lorsque la pression dans l'enceinte est parfaitement évacuée.

L'appareil domestique décrit dans le document FR-A-2 700 825 apporte une solution à certains des inconvénients mentionnés ci-dessus.

Les objets assignés à l'invention visent en conséquence à porter remède aux différents inconvénients énumérés précédemment et à proposer un nouvel appareil domestique de cuisson d'aliments sous pression pourvu d'un système de verrouillage / déverrouillage garantissant une excellente sécurité d'utilisation de l'appareil.

Un autre objet de l'invention vise à proposer un nouvel appareil domestique de cuisson d'aliments sous pression dont le système de verrouillage / déverrouillage présente une sécurité supplémentaire à l'ouverture.

Un autre objet de l'invention vise à proposer un nouvel appareil domestique de cuisson d'aliments sous pression dont le système de verrouillage / déverrouillage est sensiblement automatique et d'utilisation simple et intuitive.

Un autre objet de l'invention vise à proposer un nouvel appareil domestique de cuisson d'aliments sous pression dans lequel le réarmement du système de verrouillage / déverrouillage est effectué automatiquement.

Un autre objet de l'invention vise à proposer un nouvel appareil domestique de cuisson d'aliments sous pression dans lequel l'automaticité de la commande s'effectue aussi bien lors de la phase de fermeture que dans la phase d'ouverture de l'appareil.

Les objets assignés à l'invention sont atteints à l'aide d'un appareil domestique de cuisson d'aliments sous pression, à fermeture dite à baïonnette, pourvu d'un couvercle avec une poignée de couvercle et d'une cuve avec une poignée de cuve, le couvercle et la poignée de couvercle associée étant mobiles en rotation par rapport à la cuve et la poignée de cuve, et lesdites poignées étant destinées à être superposées en position de fermeture de l'appareil, ledit appareil comportant un système de verrouillage / déverrouillage comprenant :
- une soupape de sécurité, montée mobile sur le couvercle entre une position de fuite et une position d'étanchéité,
- un verrou avec un pied de commande, ledit verrou étant monté sur la poignée de couvercle avec une possibilité de coulissement radial élastique entre une première et une deuxième positions de butée, et agencé de manière à autoriser, dans sa première position de butée, le libre déplacement de la soupape de sécurité, et à interdire, dans sa deuxième position de butée, le passage de la soupape de sécurité de sa position de fuite vers sa position d'étanchéité,
- des moyens de blocage du verrou dans sa deuxième position de butée, comprenant d'une part un ergot de blocage, monté élastiquement mobile sur le verrou entre une position de repos et une position de contrainte, et d'autre part un contre-ergot de blocage, situé sur la poignée de couvercle, ledit ergot et ledit contre-ergot étant destinés à coopérer ensemble dans une position dite armée dans laquelle l'ergot est dans sa position de repos, pour assurer le maintien du verrou dans sa deuxième position de butée,
- des moyens de déclenchement, disposés sur la poignée de cuve de manière à actionner l'ergot de blocage vers sa position de contrainte, lorsque la poignée de couvercle vient au voisinage de sa position de fermeture, permettant ainsi son désengagement du contre-ergot, et la libération du verrou, lequel est rappelé élastiquement dans sa première position de butée,
- une encoche, ménagée sur la poignée de cuve, au sein de laquelle le pied de commande vient s'introduire lorsque le verrou se trouve dans sa première position de butée,
caractérisé en ce que ledit système de verrouillage / déverrouillage comporte des moyens de commande sécurisée à l'ouverture comprenant :
- un rebord de retenue, bordant l'encoche et disposé de manière à former une butée à l'encontre du pied de commande lorsque le verrou est dans sa première position de butée, empêchant ainsi la rotation relative des poignées suivant le sens d'ouverture de l'appareil,
- des moyens d'actionnement, reliés fonctionnellement au verrou pour permettre d'une part le déplacement du pied de commande hors de l'encoche, autorisant ainsi la rotation des poignées l'une par rapport à l'autre et l'ouverture de l'appareil, et d'autre part le réarmement automatique des moyens de blocage, et ce en décalant, lors de l'ouverture, la poignée de couvercle par rapport à sa position de fermeture d'un angle suffisant pour écarter l'ergot des moyens de déclenchement, et lui permettre de retrouver sa position de repos élastique dans laquelle il coopère avec le contre-ergot, bloquant ainsi le verrou dans sa deuxième position de butée.

D'autres particularités et avantages de l'invention apparaîtront et ressortiront plus en détails à la lecture de la description faite ci-après, en référence aux dessins annexés, donnés à titre purement illustratif et non limitatif, dans lesquels :
- La figure 1 illustre, selon une vue de dessus, la poignée de couvercle et la poignée de cuve dans une position superposée précédant l'ouverture de l'appareil, lorsque la pression à l'intérieur de l'enceinte est inférieure à la pression seuil de déclenchement de la soupape de sécurité.
- La figure 1A illustre, selon une vue en coupe suivant la ligne D-D représentée sur la figure 1, le système de verrouillage / déverrouillage conforme à l'invention dans une position déverrouillée précédant l'ouverture de l'appareil, lorsque ce dernier n'est pas sous pression.
- La figure 1B illustre, selon une vue en coupe suivant la ligne E-E représentée sur la figure 1A, un détail du système de verrouillage / déverrouillage conforme à l'invention dans une position de déverrouillage précédent l'ouverture de l'appareil lorsque ce dernier n'est pas sous pression.
- La figure 2 illustre, selon une vue de dessus, la poignée de couvercle et la poignée de cuve dans une position décalée lors de l'ouverture de l'appareil, lorsque ce dernier n'est pas sous pression.
- La figure 2A illustre, selon une vue en coupe suivant la ligne B-B représentée sur la figure 2, le système de verrouillage / déverrouillage conforme à l'invention en position d'ouverture de l'appareil, lorsque ce dernier n'est pas sous pression.
- La figure 2B illustre, selon une vue en coupe suivant la ligne C-C représentée sur la figure 2A, un détail du système de verrouillage / déverrouillage conforme à l'invention en position d'ouverture de l'appareil, lorsque ce dernier n'est pas sous pression.
- La figure 3 illustre, selon une vue de dessus, la poignée de couvercle et la poignée de cuve en position superposée de verrouillage, lorsque l'appareil est sous pression.
- La figure 3A illustre, selon une vue en coupe suivant la ligne A-A représentée sur la figure 3, le système de verrouillage / déverrouillage conforme à l'invention en position de verrouillage, lorsque l'appareil est sous pression.
- La figure 3B illustre, selon une vue en coupe suivant la ligne F-F représentée sur la figure 3A, un détail du système de verrouillage / déverrouillage conforme à l'invention en position verrouillée.
- La figure 4 illustre, selon une vue en perspective, une poignée de couvercle dans laquelle est disposé un verrou conforme à l'invention.
- La figure 5 illustre, selon une vue en perspective, un détail d'une poignée de cuve pourvue de moyens de déclenchement, d'un rebord de retenue et d'une rampe de commande conformes à l'invention.

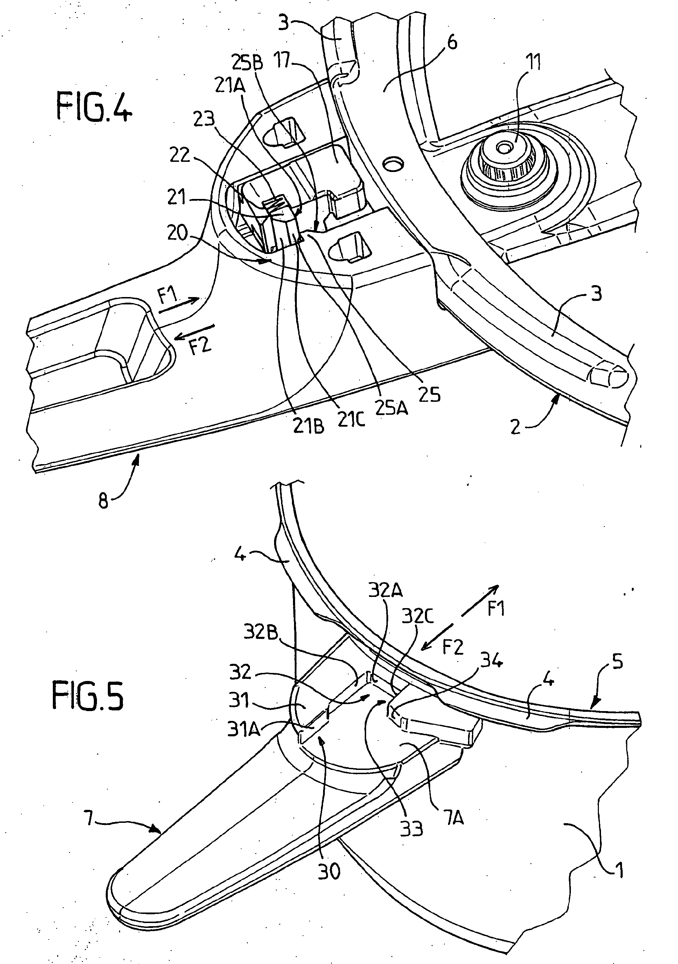

L'invention concerne un appareil domestique de cuisson d'aliments sous pression qui comporte une cuve 1 (figure 5) et un couvercle 2 (figure 4) destiné à être rapporté de manière sensiblement étanche sur la cuve 1 pour former une enceinte de cuisson.

L'appareil conforme à l'invention présente un type de fermeture dit à baïonnette. A cet effet, l'appareil est pourvu de rampes de couvercle 3, réparties sur la périphérie du couvercle 2, et de rampes de cuve 4, réparties sur la périphérie du bord de cuve 5. Ainsi, pour ouvrir ou fermer l'appareil, il est nécessaire de faire pivoter le couvercle 2 relativement à la cuve 1, de manière à désengager ou engager les rampes de cuve 4. En position de fermeture de l'appareil, l'étanchéité de l'enceinte est assurée par un joint 6 s'étendant sur la périphérie du couvercle 2.

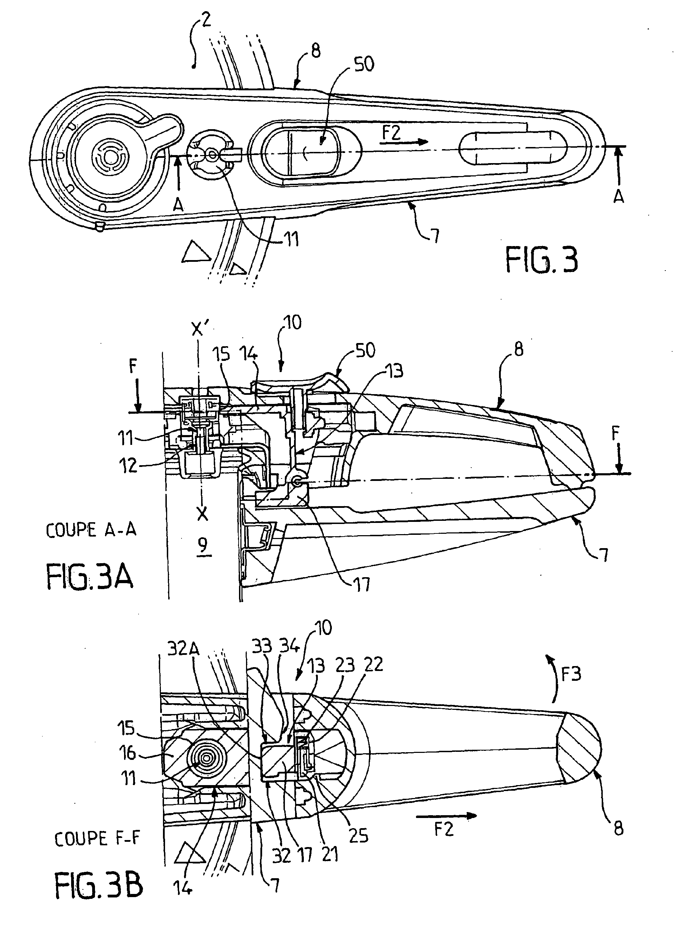

Pour faciliter les opérations de fermeture et d'ouverture de l'appareil, la cuve 1 est pourvue d'une poignée de cuve 7, et le couvercle 2 est pourvu d'une poignée de couvercle 8 destinée à être superposée et alignée avec la poignée de cuve 7 en position de fermeture de l'appareil (figures 3, 3A, 3B). Une fois rapportés sur la cuve 1, le couvercle 2 et la poignée de couvercle 8 associée sont ainsi mobiles en rotation par rapport à la cuve 1 de manière à permettre l'ouverture ou la fermeture de l'appareil.

Bien évidemment, l'appareil pourrait également comporter plus de deux poignées et ce, sans sortir du cadre de l'invention.

Selon l'invention, l'appareil comporte également un système de verrouillage / déverrouillage 10 permettant d'une part la fermeture et le verrouillage de l'appareil, et d'autre part le déverrouillage et l'ouverture de ce dernier.

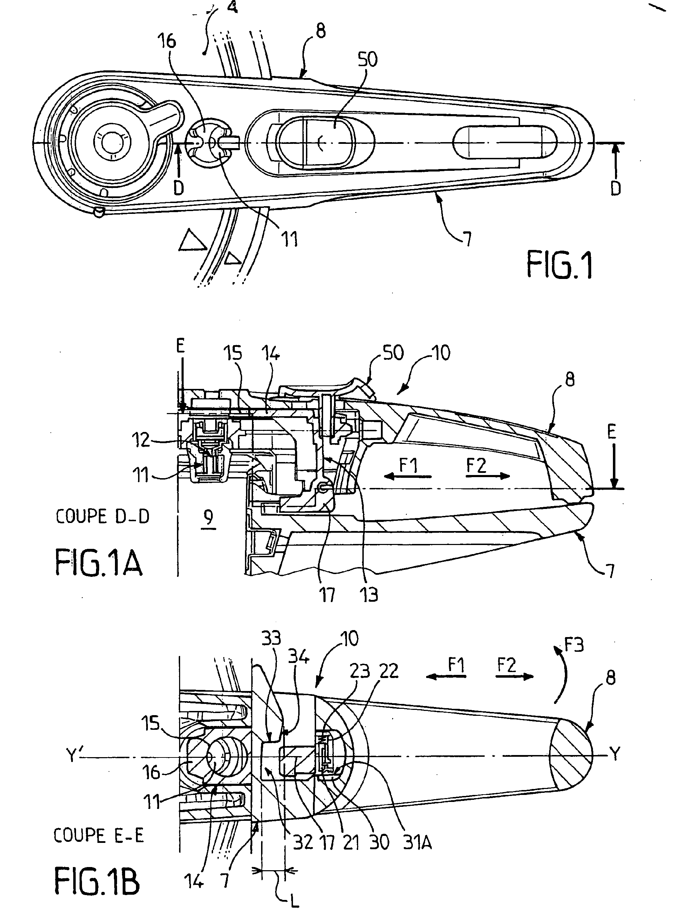

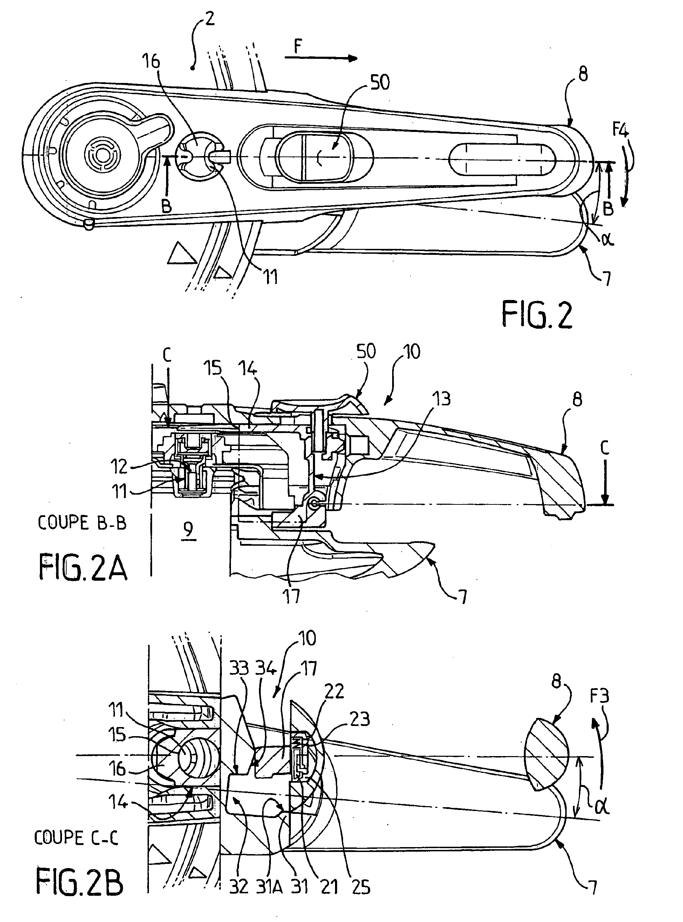

Le système de verrouillage / déverrouillage 10 comprend tout d'abord une soupape de sécurité 11 montée librement mobile sur le couvercle 2 entre une position de fuite et une position d'étanchéité. Dans sa position de fuite, la soupape de sécurité 11 occupe avantageusement une position basse (figures 1A et 2A) dans laquelle elle autorise la fuite de la vapeur contenue dans l'enceinte 9 vers l'extérieur, à travers un orifice 12 ménagé dans le couvercle 2. Dans sa position d'étanchéité, la soupape de sécurité 11 occupe avantageusement une position haute montrée à la figure 3A, dans laquelle la partie inférieure de la soupape de sécurité 11 vient en appui étanche contre le bord de l'orifice 12 formant siège d'étanchéité. Dans la position basse de la soupape de sécurité 11, et plus généralement dans toutes les positions intermédiaires entre la position basse et la position haute d'étanchéité, les fluides peuvent circuler librement entre l'enceinte 9 de l'appareil et l'extérieur.

Selon l'invention, le système de verrouillage / déverrouillage 10 comprend également un verrou 13 monté sur la poignée de couvercle 8 avec une possibilité de coulissement radial. Le verrou 13 est avantageusement monté à coulissement élastique, par exemple à l'aide d'un ressort de compression (non représenté) et dont la force de rappel est dirigée selon la flèche F1 (figure 1A) en direction du centre du récipient. Le ressort de compression a ainsi tendance à rappeler le verrou 13 vers une première position de butée, laquelle forme une position de rappel radial interne du verrou 13.

De façon particulièrement avantageuse, le verrou 13 est monté à coulissement radial selon les deux directions opposées F1, F2 représentées sur la figure 1A, entre deux positions de butée. Dans sa première position de butée, le verrou 13 est agencé de manière à autoriser le libre déplacement de la soupape de sécurité 11. Au contraire, dans sa deuxième position de butée, le verrou 13 est agencé de manière à interdire le passage de la soupape de sécurité 11 de sa position de fuite (position basse) vers sa position d'étanchéité (position haute).

A cet effet, le verrou 13 comporte avantageusement un jambage 14 s'étendant suivant une direction sensiblement parallèle aux directions F1 et F2 de déplacement du verrou, et pourvu d'un perçage 15. Lorsque le verrou 13 vient dans sa première position de butée, représentée sur les figures 3A et 3B, l'axe central du perçage 15 est sensiblement aligné avec l'axe X-X' de la soupape de sécurité 11.

Dans cette première position de butée du verrou 13, la soupape de sécurité 11 est donc librement mobile selon l'axe X-X' et peut occuper toutes les positions possibles entre sa position basse et sa position haute suivant les conditions de pression régnant dans l'enceinte 9.

Bien évidemment, dans cette configuration, les poignées 7, 8 sont superposées en position de fermeture de l'appareil.

Le verrou 13 possède avantageusement au moins une deuxième position de butée limitant le déplacement dudit verrou 13 selon la direction F2 centrifuge représentée sur la figure 1A.

Cette deuxième position de butée, formant une position de butée radiale externe, est illustrée sur la figure 2A. Dans sa deuxième position de butée, de même que dans toutes les positions intermédiaires entre la première et la deuxième position de butée, la partie d'extrémité 16 du jambage 14 est positionnée, au moins en partie, au droit de la soupape de sécurité 11, empêchant ainsi le libre déplacement de cette dernière. La soupape de sécurité 11 n'est alors plus en mesure d'atteindre sa position haute d'étanchéité et maintient une communication permanente entre l'enceinte 9 et l'extérieur empêchant ainsi l'appareil de monter en pression si ce dernier n'est pas verrouillé correctement.

Selon l'invention, le système de verrouillage / déverrouillage 10 comprend également des moyens de blocage 20 du verrou 13 dans sa deuxième position de butée. Les moyens de blocage 20 sont ainsi destinés à assurer le maintien du verrou 13 dans sa deuxième position de butée, et ce à l'encontre de la force de rappel exercée par le ressort suivant la direction F1 (figure 4).

Selon l'invention, les moyens de blocage 20 comportent avantageusement un ergot 21 de blocage monté élastiquement mobile dans un logement 22 ménagé dans le verrou 13. L'ergot 21 de blocage est monté élastiquement mobile par l'intermédiaire d'un ressort de compression 23 disposé dans le logement 22. L'ergot 21 de blocage est ainsi susceptible de coulisser au sein du logement 22 entre une position de repos, dans laquelle sa partie terminale 21C opposée au ressort 23 fait saillie à l'extérieur du logement 22 (figure 4) et une position de contrainte, dans laquelle ladite partie terminale 21C ne fait plus saillie à l'extérieur dudit logement 22.

La course de l'ergot 21 de blocage s'effectue préférentiellement suivant une direction sensiblement perpendiculaire aux directions F1, F2 de déplacement du verrou 13.

Selon l'invention, les moyens de blocage 20 du verrou 13 comportent également un contre-ergot 25 de blocage situé sur la poignée de couvercle 8 (figure 4).

Tel que cela est représenté sur la figure 4, l'ergot 21 et le contre-ergot 25 sont montés relativement de manière à coopérer ensemble dans une position dite armée, dans laquelle l'ergot 21 est dans sa position de repos, pour bloquer le coulissement du verrou 13 à l'encontre de la force de rappel exercée par le ressort suivant la flèche F1, assurant ainsi le maintien dudit verrou 13 dans sa deuxième position de butée.

A cet effet, l'ergot 21 présente une face de verrouillage 21A ainsi qu'une face d'effacement 21 B inclinée par rapport à la face de verrouillage 21A (figure 4). De même, le contre-ergot 25 comporte une contre-face de verrouillage 25A ainsi qu'une contre-face d'effacement 25B inclinée par rapport à la contre-face de verrouillage 25A. Le blocage du verrou 13 s'effectue ainsi par engagement relatif de la face de verrouillage 21A avec la contre-face de verrouillage 25A.

Selon l'invention, le système de verrouillage / déverrouillage 10 comprend également des moyens de déclenchement 30 (figure 5) disposés sur la poignée de cuve 7 de manière à actionner l'ergot 21 de blocage vers sa position de contrainte, lorsque la poignée de couvercle 8 vient au voisinage de sa position de fermeture, c'est-à-dire dans sa position d'alignement avec la poignée de cuve 7.

Avantageusement, les moyens de déclenchement 30 sont formés par une butée de déclenchement 31 ménagée sur la poignée de cuve 7 de manière à faire saillie et à venir en appui contre l'ergot 21 lorsque la poignée de couvercle 8 vient au voisinage de sa position de fermeture, forçant ainsi l'ergot 21 vers sa position de contrainte dans laquelle il se trouve sensiblement en totalité à l'intérieur du logement 22.

De façon particulièrement avantageuse, la poignée de cuve 7 comporte à cet effet une surface plane 7A, sensiblement horizontale lorsque l'autocuiseur est en position de fonctionnement, et la butée de déclenchement 31 comporte préférentiellement une face de butée 31A s'élevant de façon sensiblement perpendiculaire par rapport à la surface plane 7A (figure 5).

Avantageusement, la butée de déclenchement 31, précisément la face de butée 31A, s'étend suivant une direction sensiblement parallèle à la direction de déplacement du verrou 13.

Ainsi, lorsque la poignée de couvercle 8 vient s'aligner sur la poignée de cuve 7, au moins une portion de la partie terminale 21C de l'ergot 21 vient en appui contre la face de butée 31A causant ainsi le déplacement de l'ergot 21 à l'encontre du ressort 23. L'ergot 21 s'efface ainsi progressivement à l'intérieur du logement 22 permettant ainsi son désengagement du contre-ergot 25 et la libération du verrou 13, lequel est rappelé élastiquement dans sa première position de butée représentée sur la figure 3B.

De façon particulièrement avantageuse, le verrou 13 comporte un pied de commande 17 formant la partie inférieure du verrou.

Selon l'invention, le système de verrouillage / déverrouillage 10 comporte une encoche 32 de préférence en U avec une face d'arrêt 32A et des faces latérales 32B et 32C parallèles, ménagée sur la poignée de cuve 7 (figure 5), et au sein de laquelle le pied de commande 17 vient s'introduire lorsque le verrou 13 se trouve dans sa première position de butée (figure 3B).

Selon un aspect particulièrement intéressant de l'invention, le système de verrouillage / déverrouillage 10 comporte également des moyens de commande sécurisée à l'ouverture, destinés à empêcher l'ouverture de l'appareil lorsque toutes les conditions de sécurité ne sont pas réunies.

Les moyens de commande sécurisée à l'ouverture comportent tout d'abord un rebord de retenue 33, formé par l'une des faces latérales 32C bordant l'encoche 32 suivant le sens F3 d'ouverture de l'appareil, et disposé de manière à former une butée à l'encontre du pied de commande 17 lorsque le verrou 13 est dans sa première position de butée (figure 3B), empêchant ainsi la rotation relative des poignées 7, 8 suivant le sens F3 d'ouverture de l'appareil. Le rebord de retenue 33 permet donc d'empêcher la sortie du pied de commande 17 hors de l'encoche 32 par simple rotation relative des poignées 7, 8 et constitue ainsi un élément de blocage en position de la poignée de couvercle 8 relativement à la poignée de cuve 7.

Grâce à ce rebord de retenue 33, l'utilisateur n'est pas en mesure d'ouvrir l'appareil en exerçant une simple traction sur les poignées 7, 8, et par exemple en essayant de déplacer la poignée de couvercle 8 dans le sens de la flèche F3 pour la décaler de la poignée de cuve 7 (figure 3B).

Selon l'invention, le système de verrouillage / déverrouillage 10 comporte également des moyens d'actionnement qui, en combinaison avec le rebord de retenue 33, permettent une ouverture sécurisée de l'appareil.

Selon l'invention, les moyens d'actionnement sont reliés fonctionnellement au verrou 13 de manière à permettre :
- d'une part le déplacement du pied de commande 17 hors de l'encoche 32, autorisant ainsi la rotation des poignées 7, 8 l'une par rapport à l'autre et l'ouverture de l'appareil,
- et d'autre part le réarmement automatique des moyens de blocage 20, c'est-à-dire l'engagement relatif automatique de la face de verrouillage 21A et de la contre-face de verrouillage 25A.
   Les moyens d'actionnement sont avantageusement actionnables et de préférence au moins en partie déplaçables par l'utilisateur, de telle sorte que leur activation entraîne le déplacement du pied de commande 17 hors de l'encoche 32 de manière à autoriser la rotation relative des poignées 7, 8, une fois le rebord de retenue 33 franchi par le pied de commande 17.

Tel que cela est représenté sur la figure 2B, le réarmement automatique des moyens de blocage 20 est effectué en décalant, lors de l'ouverture, la poignée de couvercle 8 par rapport à sa position de fermeture d'un angle α suffisant pour écarter l'ergot 21 des moyens de déclenchement 30, précisément de la face de butée 31A, lui permettant ainsi de retrouver sa position de repos élastique dans laquelle il coopère avec le contre-ergot 25, bloquant ainsi le verrou 13 dans sa deuxième position de butée.

Grâce à ce réarmement automatique, l'autocuiseur, une fois ouvert, est fin prêt pour une nouvelle utilisation.

La combinaison du rebord de retenue 33 avec les moyens d'actionnement décrits précédemment est ainsi à même de présenter notamment deux aspects intéressants :
- d'une part, elle garantit à l'utilisateur une sécurité d'ouverture, l'empêchant d'ouvrir l'appareil en faisant simplement pivoter les poignées 7, 8 l'une par rapport à l'autre,
- d'autre part, elle permet un réarmement quasi-automatique des moyens de blocage 20 du verrou 13, de telle sorte que l'autocuiseur, une fois ouvert, est fin prêt pour une nouvelle utilisation.

Avantageusement, le rebord de retenue 33 s'étend suivant une direction sensiblement parallèle à la direction radiale de déplacement du verrou 13, c'est-à-dire suivant une direction sensiblement normale au sens de rotation des poignées 7, 8 l'une par rapport à l'autre.

De façon particulièrement avantageuse, les moyens d'actionnement sont activables par l'utilisateur et comportent un bouton de commande 50, situé sur la poignée de couvercle 8 et relié fonctionnellement au verrou 13 de manière à permettre le déplacement du pied de commande 17 hors de l'encoche 32.

En particulier, le bouton de commande 50 et le verrou 13 sont préférentiellement agencés de telle manière que, lors de l'ouverture de l'appareil, l'actionnement du bouton de commande 50 entraîne le déplacement du verrou 13 suivant une direction radiale centrifuge (flèche F2).

De façon particulièrement avantageuse, le bouton de commande 50 est solidaire du verrou 13.

Selon un premier mode de réalisation de l'invention, les moyens d'actionnement peuvent être formés par le seul bouton de commande 50, lequel devra être déplacé par l'utilisateur sur une distance telle que la course correspondante du verrou 13 soit suffisante pour qu'il franchisse le rebord de retenue 33 et qu'il atteigne sa deuxième position de butée.

Selon un deuxième mode préférentiel de réalisation de l'invention, les moyens d'actionnement comportent également une rampe de commande 34, située sur la poignée de cuve 7. Tel que cela est représenté sur la figure 2B, la rampe de commande 34 est disposée et orientée de telle sorte qu'à l'ouverture, une fois le pied de commande 17 situé hors de l'encoche 32 et la poignée de couvercle 8 située hors de sa position de fermeture, c'est-à-dire décalée de l'angle α par rapport à la poignée de cuve 7, le pied de commande 17 s'engage, lorsque le bouton de commande 50 est relâché, sur ladite rampe de commande 34 et se déplace suivant une direction radiale centrifuge au fur et à mesure de la rotation relative des poignées 7, 8, conduisant ainsi le verrou 13 vers sa deuxième position de butée.

Ce mode de réalisation de l'invention présente ainsi l'avantage de permettre à l'utilisateur de relâcher le bouton de commande 50 dès lors qu'il a amorcé la rotation relative des poignées 7, 8.

Tel que cela est représenté sur la figure 1 B, la rampe de commande 34 s'étend préférentiellement, à partir du rebord de retenue 33, suivant une direction centrifuge sensiblement oblique relativement à la direction de déplacement F1 ou F2 du verrou 13.

Selon une caractéristique particulièrement avantageuse de l'invention, la longueur de la rampe de commande 34 est suffisante pour d'une part engendrer une course du verrou 13 suffisante pour que ce dernier puisse atteindre sa deuxième position de butée, et d'autre part permettre le réarmement des moyens de blocage 20 et donc le maintien du verrou 13 dans cette deuxième position de butée.

Ainsi, la longueur du rebord de retenue 33 et la longueur de la rampe de commande 34 projetées sur l'axe Y-Y' représentant la direction de déplacement du verrou 13 sont adaptées pour que leur addition représente une longueur L résultante sensiblement égale à la course du verrou 13 entre les première et deuxième positions de butée (figure 1 B).

Le mode de fonctionnement de l'appareil conforme à l'invention va maintenant être décrit en s'appuyant sur les figures 1 à 5.

En vue d'utiliser l'appareil domestique de cuisson d'aliments sous pression conforme à l'invention, l'utilisateur commence par faire reposer le couvercle 2 sur la cuve 1 de telle sorte que les poignées 7, 8 soient sensiblement décalées l'une par rapport à l'autre et non superposées.

Dans cette configuration, le verrou 13 occupe sa deuxième position de butée, illustrée sur la figure 4, et la soupape de sécurité 11 n'est pas libre de se déplacer et de venir en position haute d'étanchéité.

L'utilisateur procède ensuite à la fermeture progressive de l'appareil en amenant progressivement par rotation selon la flèche F4 représentée sur la figure 2 les deux poignées 7, 8 vers une position de superposition et d'alignement telle que celle illustrée aux figures 3, 3A et 3B.

Dans la position de pré-fermeture illustrée sur la figure 1 B, les deux poignées 7, 8 sont sensiblement alignées et l'ergot 21 vient en appui sur la face de butée 31A de la butée de déclenchement 31.

Dans cette position de pré-fermeture, la soupape de sécurité 11 n'est toujours pas en mesure de se déplacer vers sa position haute d'étanchéité, en raison de l'interposition de la partie d'extrémité 16 du jambage 14. Ainsi, dans cette configuration de verrouillage imparfait de l'appareil, l'enceinte 9 ne peut pas monter en pression, garantissant ainsi la sécurité de l'utilisateur. Au fur et à mesure de la rotation des poignées 7, 8 entre la configuration représentée sur la figure 2 et la configuration représentée sur les figures 1, 1A et 1B, l'ergot 21 est progressivement actionné par la butée de déclenchement 31 et s'enfonce à l'intérieur du logement 22 à l'encontre du ressort 23 jusqu'à ce que ledit ergot 21 se désengage du contre-ergot 25.

Une fois le désengagement opéré, le verrou 13 est libéré et susceptible de venir occuper sa première position de butée illustrée sur la figure 3B, dans laquelle le pied de commande 17 vient avantageusement en appui contre la face d'arrêt 32A de l'encoche 32. Dans cette position, qui correspond à la position de fermeture et de verrouillage de l'appareil, le perçage 15 est aligné avec l'axe X-X' de la soupape de sécurité 11, autorisant ainsi le libre déplacement de cette dernière vers sa position d'étanchéité. Ainsi, la montée progressive de la pression à l'intérieur de l'enceinte 9 entraîne le déplacement de la soupape de sécurité 11 vers sa position haute d'étanchéité illustrée sur la figure 3A.

Grâce à ce système de fermeture, l'appareil de cuisson conforme à l'invention n'est susceptible de monter en pression qu'à partir du moment où l'appareil est totalement fermé et verrouillé.

Une fois la cuisson terminée, la source de chauffe est éteinte et la pression à l'intérieur de l'enceinte 9 diminue. Lorsque la pression devient inférieure à une valeur seuil, par exemple de l'ordre de 0,5 kPa, la soupape de sécurité 11 peut retourner dans sa position basse de fuite. Le verrou 13 n'est alors plus verrouillé par la soupape de sécurité 11, et est de nouveau susceptible de se déplacer.

La configuration du système de verrouillage / déverrouillage 10 conforme à l'invention est alors semblable à celle représentée sur la figure 3B, la seule différence provenant du fait que la soupape de sécurité 11 est en position basse. Le pied de commande 17 est, tel que cela est représenté sur la figure 3B, engagé au sein de l'encoche 32, de telle sorte que l'ouverture de l'appareil nécessite tout d'abord un actionnement du bouton de commande 50 par l'utilisateur. Ainsi, pour ouvrir l'appareil, l'utilisateur doit tout d'abord tirer sur le bouton 50, selon une direction radiale centrifuge F2, de manière à faire sortir le pied de commande 17 de ladite encoche 32. En particulier, le bouton de commande 50 doit être déplacé sur une distance suffisante pour permettre au pied de commande 17 de passer le rebord de retenue 33.

Deux cas de figures sont alors susceptibles de se présenter.

Dans le premier cas, l'utilisateur déplace le bouton de commande 50 sur une distance suffisante pour permettre le réarmement des moyens de blocage 20. Dans ce cas, le verrou 13 se déplace sur une course suffisante pour que les faces et contre-faces de verrouillage 21A, 25A de l'ergot 21 et du contre-ergot 25 s'engagent mutuellement, bloquant ainsi le verrou 13 dans sa deuxième position de butée illustrée sur la figure 4. L'utilisateur peut ensuite ouvrir l'appareil en effectuant une rotation des poignées 7, 8 l'une par rapport à l'autre suivant la flèche F3 représentée sur la figure 1 B.

Dans un autre cas de figure, le déplacement du bouton de commande 50 est suffisant pour permettre au verrou 13, précisément au pied de commande 17, de se désengager de l'encoche 32 et de dépasser le rebord de retenue 33, mais est insuffisant pour permettre le réarmement des moyens de blocage 20.

Dans ce cas, l'utilisateur n'a qu'à amorcer une légère rotation des poignées 7, 8 l'une par rapport à l'autre dans le sens F3, tout en maintenant le bouton de commande 50. Dès que la rotation est amorcée, l'utilisateur peut alors relâcher le bouton de commande 50, ce qui a pour effet de libérer le verrou 13. Une fois libéré, ce dernier est rappelé élastiquement dans la direction F1 centripète et vient naturellement engager la rampe de commande 34, par le biais du pied de commande 17, tel que cela est représenté sur la figure 2B.

Pour terminer l'ouverture de l'appareil, l'utilisateur doit alors poursuivre la rotation des poignées 7, 8 l'une par rapport à l'autre suivant le sens F3, réalisant en même temps le réarmement automatique des moyens de blocage 20. Ainsi, la rampe de commande 34 présente avantageusement une longueur suffisante pour permettre ce réarmement. Le verrou 13 est alors de nouveau bloqué dans une position empêchant tout déplacement de la soupape de sécurité 11.

L'appareil de cuisson conforme à l'invention présente donc notamment le double avantage d'une ouverture sécurisée et d'un réarmement automatique permettant, lors de l'ouverture de l'appareil, de configurer ce dernier pour qu'il soit immédiatement opérationnel et ce, avec un nombre minimum de manipulations de la part de l'utilisateur.

## Revendications

1. Appareil domestique de cuisson d'aliments sous pression, à fermeture dite à baïonnette, pourvu d'un couvercle (2) avec une poignée de couvercle (8) et d'une cuve (1) avec une poignée de cuve (7), le couvercle (2) et la poignée de couvercle (8) associée étant mobiles en rotation par rapport à la cuve (1) et la poignée de cuve (7), et lesdites poignées (7, 8) étant destinées à être superposées en position de fermeture de l'appareil, ledit appareil comportant un système de verrouillage / déverrouillage (10) comprenant :
- une soupape de sécurité (11), montée mobile sur le couvercle (2) entre une position de fuite et une position d'étanchéité,
- un verrou (13) avec un pied de commande (17), ledit verrou (13) étant monté sur la poignée de couvercle (8) avec une possibilité de coulissement radial élastique entre une première et une deuxième positions de butée, et agencé de manière à autoriser, dans sa première position de butée, le libre déplacement de la soupape de sécurité (11), et à interdire, dans sa deuxième position de butée, le passage de la soupape de sécurité (11) de sa position de fuite vers sa position d'étanchéité,
- des moyens de blocage (20) du verrou (13) dans sa deuxième position de butée, comprenant d'une part un ergot (21) de blocage, monté élastiquement mobile sur le verrou (13) entre une position de repos et une position de contrainte, et d'autre part un contre-ergot (25) de blocage, situé sur la poignée de couvercle (8), ledit ergot (21) et ledit contre-ergot (25) étant destinés à coopérer ensemble dans une position dite armée dans laquelle l'ergot (21) est dans sa position de repos, pour assurer le maintien du verrou (13) dans sa deuxième position de butée,
- des moyens de déclenchement (30), disposés sur la poignée de cuve (7) de manière à actionner l'ergot (21) de blocage vers sa position de contrainte, lorsque la poignée de couvercle (8) vient au voisinage de sa position de fermeture, permettant ainsi son désengagement du contre-ergot (25), et la libération du verrou (13), lequel est rappelé élastiquement dans sa première position de butée,
- une encoche (32), ménagée sur la poignée de cuve (7), au sein de laquelle le pied de commande (17) vient s'introduire lorsque le verrou (13) se trouve dans sa première position de butée,
**caractérisé en ce que** ledit système de verrouillage / déverrouillage (10) comporte des moyens de commande sécurisée à l'ouverture comprenant :
- un rebord de retenue (33), bordant l'encoche (32) et disposé de manière à former une butée à l'encontre du pied de commande (17) lorsque le verrou (13) est dans sa première position de butée, empêchant ainsi la rotation relative des poignées (7, 8) suivant le sens (F3) d'ouverture de l'appareil,
- des moyens d'actionnement, reliés fonctionnellement au verrou (13) pour permettre d'une part le déplacement du pied de commande (17) hors de l'encoche (32), autorisant ainsi la rotation des poignées (7, 8) l'une par rapport à l'autre et l'ouverture de l'appareil, et d'autre part le réarmement automatique des moyens de blocage (20), et ce en décalant, lors de l'ouverture, la poignée de couvercle (8) par rapport à sa position de fermeture d'un angle (α) suffisant pour écarter l'ergot (21) des moyens de déclenchement (30), et lui permettre de retrouver sa position de repos élastique dans laquelle il coopère avec le contre-ergot (25), bloquant ainsi le verrou (13) dans sa deuxième position de butée.

2. Appareil selon la revendication 1 **caractérisé en ce que** le rebord de retenue (33) s'étend suivant une direction sensiblement parallèle à la direction radiale de déplacement du verrou (13).

3. Appareil selon la revendication 1 ou 2 **caractérisé en ce que** les moyens d'actionnement comportent un bouton de commande (50), situé sur la poignée de couvercle (8) et relié fonctionnellement au verrou (13) de manière à permettre le déplacement du pied de commande (17) hors de l'encoche (32).

4. Appareil selon la revendication 3 **caractérisé en ce que** le bouton de commande (50) et le verrou (13) sont agencés de telle manière que, lors de l'ouverture, l'actionnement du bouton de commande (50) entraîne le déplacement du verrou (13) suivant une direction radiale centrifuge.

5. Appareil selon l'une des revendications 1 à 4 **caractérisé en ce que** le bouton de commande (50) est solidaire du verrou (13).

6. Appareil selon l'une des revendications 3 à 5 **caractérisé en ce que** les moyens d'actionnement comportent également une rampe de commande (34), située sur la poignée de cuve (7), disposée et orientée de telle sorte qu'une fois le pied de commande (17) situé hors de l'encoche (32) et la poignée de couvercle (8) située hors de sa position de fermeture, le pied de commande (17) s'engage, lorsque le bouton de commande (50) est relâché, sur ladite rampe de commande (34) et se déplace suivant une direction radiale centrifuge au fur et à mesure de la rotation relative des poignées (7, 8), conduisant ainsi le verrou (13) vers sa deuxième position de butée.

7. Appareil selon la revendication 6 **caractérisé en ce que** la rampe de commande (34) s'étend, à partir du rebord de retenue (33), suivant une direction centrifuge sensiblement oblique relativement à la direction de déplacement du verrou (13).

8. Appareil selon la revendication 6 ou 7 **caractérisé en ce que** la longueur de la rampe de commande (34) est suffisante pour d'une part engendrer une course du verrou (13) suffisante pour atteindre la deuxième position de butée, et d'autre part permettre le réarmement des moyens de blocage (20) et donc le maintien du verrou (13) dans sa deuxième position de butée.

9. Appareil selon l'une des revendications 6 à 8 **caractérisé en ce que** la longueur du rebord de retenue (33) et la longueur de la rampe (34) de commande projetées sur l'axe (Y-Y') représentant la direction de déplacement du verrou (13) sont adaptées pour que leur addition représente une longueur (L) résultante sensiblement égale à la course du verrou (13) entre les première et deuxième positions de butée.

10. Appareil selon l'une des revendications 1 à 9 **caractérisé en ce que** les moyens de déclenchement (30) sont formés par une butée de déclenchement (31), ménagée sur la poignée de cuve (7) de manière à faire saillie et à venir en appui contre l'ergot (21) lorsque la poignée de couvercle (8) vient au voisinage de sa position de fermeture, forçant ainsi l'ergot (21) vers sa position de contrainte.

11. Appareil selon la revendication 10 **caractérisé en ce que** la butée de déclenchement (31) s'étend suivant une direction sensiblement parallèle à la direction de déplacement du verrou (13).

## Claims

1. Domestic appliance for cooking food under pressure, with a so-called bayonet closure, provided with a lid (2) with a lid handle (8) and a vessel (1) with a vessel handle (7), the lid (2) and the associated lid handle (8) being able to move in rotation with respect to the vessel (1) and vessel handle (7), and the said handles (7, 8) being intended to be superimposed in the closure position of the appliance, the said appliance comprising a locking/unlocking system (10) comprising:
- a safety valve (11) mounted so as to be able to move on the lid (2) between a leakage position and a sealed position,
- a bolt (13) with a control foot (17), the said bolt (13) being mounted on the lid handle (8) with a possibility of resilient radial sliding between first and second stop positions, and arranged so as to allow, in its first stop position, the free movement of the safety value (11), and to prevent, in its second stop position, the passage of the safety value (11) from its leakage position to its sealed position,
- means (20) of locking the bolt (13) in its second stop position, comprising firstly a locking lug (21) mounted so as to be resiliently movable on the bolt (13) between an idle position and a constrained position, and secondly a locking counter-lug (25) situated on the lid handle (8), the said lug (21) and the said counter-lug (25) being intended to cooperate together in a so-called armed position in which the lug (21) is in its idle position, in order to hold the bolt (13) in its second stop position,
- triggering means (30) disposed on the vessel handle (7) so as to actuate the locking lug (21) towards its constrained position, when the lid handle (8) comes close to its closure position, thus allowing its disengagement from the counter-lug (25) and the release of the bolt (13), which is resiliently returned to its first stop position,
- a recess (32) provided on the vessel handle (7), in which the control foot (17) comes to be introduced when the bolt (13) is situated in its first stop position,
**characterised in that** the said locking/unlocking system (10) comprises a control means protected against opening, comprising:
- a retaining rim (33) bordering the recess (32) and disposed so as to form a stop counter to the control foot (17) when the bolt (13) is in its first stop position, thus preventing the relative rotation of the handles (7, 8) in the direction (F3) of opening of the appliance,
- actuation means functionally connected to the bolt (13) to allow firstly the movement of the control foot (17) out of the recess (32), thus enabling the rotation of the handles (7, 8) with respect to each other and the opening of the appliance, and secondly the automatic re-arming of the locking means (20), by shifting, at the time of opening, the lid handle (8) with respect to its closure position by an angle (α) sufficient to move the lug (21) away from the triggering means (30) and to enable it to regain its resilient idle position in which it cooperates with the counter-lug (25), thus locking the bolt (13) in its second stop position.

2. Appliance according to claim 1, **characterised in that** the retaining rim (33) extends in a direction substantially parallel to the radial direction of movement of the bolt (13).

3. Appliance according to claim 1 or 2, **characterised in that** the actuation means comprise a control knob (50), situated on the lid handle (8) and functionally connected to the bolt (13) so as to allow the movement of the control fool (17) out of the recess (32).

4. Appliance according to claim 3, **characterised in that** the control knob (50) and the bolt (13) are arranged so that, on opening, actuation of the control knob (50) causes the movement of the bolt (13) in a centrifugal radial direction.

5. Appliance according to one of claims 1 to 4, **characterised in that** the control knob (50) is fixed to the bolt (13).

6. Appliance according to one of claims 3 to 5, **characterised in that** the actuation means also comprise a control ramp (34) situated on the vessel handle (7), disposed and oriented so that, once the control foot (17) is situated outside the recess (32) and the lid handle (8) is situated out of its closure position, the control foot (17) engages, when the control knob (50) is released, on the said control ramp (34) and moves in a centrifugal radial direction along with the relative rotation of the handles (7, 8), thus conducting the bolt (13) towards its second stop position.

7. Appliance according to claim 6, **characterised in that** the control ramp (34) extends from the retaining rim (33) in a centrifugal direction that is substantially oblique relative to the direction of movement of the bolt (13).

8. Appliance according to claim 6 or 7, **characterised in that** the length of the control ramp (34) is sufficient on the one hand to give rise to travel of the bolt (13) that is sufficient to reach the second stop position, and on the other hand to permit the resetting of the locking means (20) and therefore the holding of the bolt (13) in its second position.

9. Appliance according to one of claims 6 to 8, **characterised in that** the length of the retaining rim (33) and the length of the control ramp (34), both projected onto the axis (Y-Y') representing the direction of movement of the bolt (13), are adapted so that their addition represents a resulting length (L) substantially equal to the travel of the bolt (13) between its first and second stop positions.

10. Appliance according to one of claims 1 to 9, **characterised in that** the triggering means (30) are formed by a triggering stop (31), formed on the vessel handle (7) so as to project and come into abutment against the lug (21) when the lid handle (8) comes close to its closure position, thus forcing the lug (21) towards its constrained position.

11. Appliance according to claim 10, **characterised in that** the triggering stop (31) extends in a direction substantially parallel to the direction of movement of the bolt (13).

## Patentansprüche

1. Haushaltsdruckgargerät für Nahrungsmittel mit einem sogenannten Bajonettverschluss, das mit einem Deckel (2) und einem Deckelgriff (8) sowie mit einem Behälter (1) und einem Behältergriff (7) versehen ist, und der Deckel (2) und der damit verbundene Deckelgriff (8) in Bezug zu dem Behälter (1) und zu dem Behältergriff (7) beweglich und drehbar angeordnet sind, und die besagten Griffe (7,8) dazu bestimmt sind, in Verschlussstellung des Gerätes aufeinander zu liegen, wobei das besagte Gerät ein Verriegelungs- / Entriegelungssystem (10) aufweist, das umfasst:
- ein Sicherheitsventil (11), das auf dem Deckel (2) zwischen einer Ausströmstellung und einer Dichtheitsstellung beweglich montiert ist,
- einen Riegel (13) mit einem Steuer-Fußelement (17), wobei besagter Riegel (13) auf dem Deckelgriff (8) mit der Möglichkeit einer elastischen radialen Verschiebung zwischen einer ersten und einer zweiten Anschlagstellung montiert und derart angeordnet ist, dass er in seiner ersten Anschlagstellung die freie Verschiebung des Sicherheitsventils (11) ermöglicht und in seiner zweiten Anschlagstellung den Übergang des Sicherheitsventils (11) von seiner Ausströmstellung in seine Dichtheitsstellung verhindert,
- Mittel zur Blockierung (20) des Riegels (13) in seiner zweiten Anschlagstellung, die einerseits eine Blockiernase (21), die auf dem Riegel (13) zwischen einer Ruhestellung und einer Spannungsstellung beweglich und elastisch montiert ist, und andererseits ein Gegenblockiernase (25), die auf dem Deckelgriff (8) angeordnet ist, aufweisen, wobei besagte Blockiernase (21) und besagte Gegenblockiernase (25) dazu bestimmt sind, in einer sogenannten aktivierten Stellung zusammenzuwirken, in welcher die Blockiernase (21) sich in ihrer Ruhestellung befindet, um das Verbleiben des Riegels (13) in seiner zweiten Anschlagstellung sicherzustellen,
- Auslösemittel (30), die auf dem Behältergriff (7) so angeordnet sind, dass sie die Blockiernase (21) in ihre Spannungsstellung überführen, wenn der Deckelgriff (8) in die Nähe seiner Verschlussstellung kommt, und somit ihre Loslösung von der Gegenblockiernase (25) und die Entriegelung des Riegels (13) erlauben, welcher elastisch in seine erste Anschlagstellung zurückgeführt wird,
- eine Aussparung (32), die in dem Behältergriff (7) angeordnet ist, in welche das Steuer-Fußelement (17) einrastet, wenn sich der Riegel (13) in seiner ersten Anschlagstellung befindet,
**dadurch gekennzeichnet, dass** das besagte Verriegelungs- / Entriegelungssystem (10) Mittel zur Sicherheitssteuerung bei der Öffnung beinhaltet, die umfassen:
- eine Haltekante (33), die die Aussparung (32) umrandet und derart angeordnet ist, dass sie einen Anschlag gegen das Steuer-Fußelement (17) bildet, wenn sich der Riegel (13) in seiner ersten Anschlagstellung befindet, und damit die relative Drehung der Griffe (7,8) in dem Richtungssinn (F3) verhindert, der zur Öffnung des Gerätes führt,
- Betätigungsmittel, die mit dem Riegel (13) funktional verbunden sind, um einerseits die Verschiebung des Steuerfußelementes (17) aus der Aussparung (32) heraus zu ermöglichen, wodurch die Drehung der Griffe (7,8) in Bezug zueinander und die Öffnung des Gerätes einerseits, und das automatische Wiederaktivieren der Mittel zur Blockierung (20) andererseits ermöglicht werden, und zwar durch Verschiebung bei der Öffnung des Deckelgriffes (8) in Bezug zu dessen Verschlussstellung um einen Winkel (α), der ausreichend ist, um die Blockiernase (21) von den Auslösemitteln (30) zu entfernen und ihr zu ermöglichen, ihre elastische Ruhestellung wiedereinzunehmen, in welcher sie mit der Gegenblockiernase (25) zusammenwirkt, und so den Riegel (13) in seiner zweiten Anschlagsstellung blockiert.

2. Gerät nach Anspruch 1, **dadurch gekennzeichnet, dass** die Haltekante (33) in einer Richtung verläuft, die im Wesentlichen parallel zu der radialen Richtung der Verschiebung des Riegels (13) ist.

3. Gerät nach Anspruch 1 oder 2, **dadurch gekennzeichnet, dass** die Betätigungsmittel einen Steuerknopf (50) umfassen, der auf dem Deckelgriff (8) angeordnet ist und mit dem Riegel (13) funktional so verbunden ist, dass er die Verschiebung des Steuerfußelementes (17) aus der Aussparung (32) heraus ermöglicht.

4. Gerät nach Anspruch 3, **dadurch gekennzeichnet, dass** der Steuerknopf (50) und der Riegel (13) derart angeordnet sind, dass bei der Öffnung die Betätigung des Steuerknopfes (50) die Verschiebung des Riegels (13) in eine radial nach außen gerichtete Richtung bewirkt.

5. Gerät nach einem der Ansprüche 1 bis 4, **dadurch gekennzeichnet, dass** der Steuerknopf (50) mit dem Riegel (13) verbunden ist.

6. Gerät nach einem der Ansprüche 3 bis 5, **dadurch gekennzeichnet, dass** die Betätigungsmittel auch eine Steuerrampe (34) umfassen, die sich auf dem Behältergriff (7) befindet, und derart angeordnet und orientiert ist, dass, wenn das Steuerfußelement (17) sich außerhalb der Aussparung (32) befindet, und der Deckelgriff (8) sich außerhalb seiner Verschlussstellung befindet, das Steuerfußelement (17) auf besagter Steuerrampe (34) aufliegt, wenn der Steuerknopf (50) gelockert wird, und sich gemäß einer radial nach außen gerichteten Richtung entsprechend der relativen Drehung der Griffe (7, 8) bewegt, wodurch der Riegel (13) in seine zweite Anschlagstellung gebracht wird.

7. Gerät nach Anspruch 6, **dadurch gekennzeichnet, dass** sich die Steuerrampe (34) ausgehend von der Haltekante (33) erstreckt und in einer nach außen gerichteten, im Wesentlichen schrägen Richtung in Bezug auf die Verschiebungsrichtung des Riegels (13) verläuft.

8. Gerät nach Anspruch 6 oder 7, **dadurch gekennzeichnet, dass** die Länge der Steuerrampe (34) ausreichend ist, um einerseits einen Hub des Riegels (13) hervorzurufen, der ausreichend ist, um zu der zweiten Anschlagstellung zu gelangen, und um andererseits das Wiederaktivieren der Mittel zur Blockierung (20) und somit das Verbleiben des Riegels (13) in seiner zweiten Anschlagstellung zu ermöglichen.

9. Gerät nach einem der Ansprüche 6 bis 8, **dadurch gekennzeichnet, dass** die Länge der Haltekante (33) und die Länge der Steuerrampe (34), die auf die Achse (Y-Y') projiziert sind, welche die Verschiebungsrichtung des Riegels (13) darstellt, derart angepasst sind, dass ihre Summe eine resultierende Länge (L) ergibt, die im Wesentlichen dem Hub des Riegels (13) zwischen der ersten und der zweiten Anschlagstellung entspricht.

10. Gerät nach einem der Ansprüche 1 bis 9, **dadurch gekennzeichnet, dass** die Auslösemittel (30) durch einen Auslöseanschlag (31) gebildet sind, der auf dem Behältergriff (7) derart angeordnet ist, dass er hervorspringt und gegen die Blockiernase (21) drückt, wenn der Deckelgriff (8) in die Nähe seiner Verschlussstellung kommt, wodurch die Blockiernase (21) in ihre Spannungsstellung gebracht wird.

11. Gerät nach Anspruch 10, **dadurch gekennzeichnet, dass** der Auslöseanschlag (31) in einer Richtung verläuft, die im Wesentlichen parallel zur Richtung der Verschiebung des Riegels (13) ist.
